# EUROPEAN PATENT APPLICATION

(11) **EP 2 866 528 A1**
(43) Date of publication of application: **29.04.2015**
(21) Application number: 13189630.0
(22) Date of filing: 22.10.2013
(51) Int. Cl.: H05B 37/02

(54) **Position based management of an artificial lighting arrangement**

(71) Applicant: Heliospectra AB, 402 29 Göteborg (SE)
(72) Inventor: Pohjanvouri, Timo, 436 50 Hovås (SE); Rebhan, Richard, 113 33 Stockholm (SE)
(74) Representative: Edlund, Fabian

(57) **Abstract**

The present invention relates to a method for controlling an illumination system based on the position of a mobile electronic device (108). The illumination sytem intended to control the growth of a plurality of plants (102) being arranged in a controlled environment (104) and subject to light emitted by at least one artificial lighting arrangement (106). The invention also relates to a corresponding mobile electronic device (108) and to a computer program product.

## Description

### TECHNICAL FIELD

The present invention relates to a method for position based management of an artificial lighting arrangement arranged to control growth of a plurality of plants in a controlled environment. The invention also relates to a corresponding mobile electronic device and to a computer program product.

### BACKGROUND OF THE INVENTION

Artificial and supplemental lighting in e.g. a greenhouse typically involves use of an illumination system for stimulating plant growth, the illumination system comprising a plurality of high power light sources. Different types of light sources, having different light spectrum and providing different effects on growth stimulation, may be included, such as light sources based on metal halide (MH) or high intensity discharge (HID) which includes high pressure sodium (HPS). Using metal halide based lighting typically promotes shorter, bushy growth; whereas high pressure sodium based lighting in comparison typically tend to produce taller and stretched plants.

Recently, much progress has been made in increasing the brightness of light emitting diodes (LEDs). As a result, LEDs have become sufficiently bright and inexpensive to serve also for artificial lighting in e.g. a greenhouse environment, additionally providing the possibility of emitting light with adjustable light spectrum. By mixing differently colored LEDs and adjusting their individual intensity a desired light spectrum may be obtained. An adjustable lighting system typically comprises a number of primary colors, for one example the three primaries red, green and blue. The light spectrum of the generated light is determined by the colors of the LEDs that are used, as well as by the mixing ratios of the intensity of light from LEDs of different colors. Thus, each LED of a LED based illumination system may be individually controlled such that a light spectrum of the overall emitted light may be conveniently adjusted. Furthermore, by using LEDs it is possible to decrease the energy consumption, a requirement that is well in line with the current environmental trend. Additionally, using LED based illumination system minimizes the amount of light source generated heat which is specifically suitable in an environment where temperature control is desirable. An example of an LED based illumination system is disclosed in WO2008118080, comprising a light sensor communicatively coupled to a processor, where the processor implements a control algorithm for modulating and improving plant growth and attributes by adjusting the light spectrum emitted by the illumination system.

Document WO2008118080 shows a promising approach in relation to artificial lighting in a greenhouse environment, however, it would still be desirable to further optimize the artificial light emitted by an illumination system, to be able to improve the growth process of a plant, specifically improving handling of light and data relating to e.g. a growth state of the plants or other plant related properties and/or conditions, within the close vicinity of the plant.

### SUMMARY OF THE INVENTION

According to a first aspect of the invention, the above is at least partly alleviated by a method for position based management of an artificial lighting arrangement arranged to control growth of a plurality of plants in a controlled environment, the method comprising the steps of: determining, using a user operated mobile electronic device, a position of the mobile electronic device within the controlled environment, and at least one of 1) adjusting at least one parameter of light emitted by the artificial lighting arrangement based on the position of the mobile electronic device, and 2) exchanging information between the mobile electronic device and a remotely arranged control unit, the information relating to at least one of the plurality of plants, wherein at least one plant is arranged in the vicinity of the position of the mobile electronic device.

In accordance to the invention, the expression "controlled environment" should be interpreted broadly, including for example a greenhouse, a growing cabinet, or similar controlled growth environment where the plants may be subject to at least illumination of natural light. The controlled environment is thus typically an "indoor environment" comprising a transparent window or similar for allowing external light (such as natural light from the sun) to be received by the plants.

According to the invention, the position of a mobile, typically handheld, device is determined. Once the position is determined, at least one of two actions will be taken:
1) adjust light based on the position (may include "good light for workers", specific light for e.g. finding specific conditions of the plant (e.g. fungus, mold, etc), good light for taking a photograph), and
2) exchange (i.e. download/upload) information between the mobile device and a remotely located control unit (may be a server/database).

Adjusting at least one parameter of light emitted by the artificial lighting arrangement may include automatically reducing any UV component of the light emitted by the lighting arrangement as soon as the position of the user operated mobile electronic device is determined. Such UV light may be detrimental to the health of the staff of the greenhouse, and the invention thus provides an efficient way to improve the working conditions for the staff. As an example, the mobile electronic device may transmit information, such as current position, via e.g. W-LAN, to the control unit, to perform an action such as switching off or adjusting an UV light component in the appropriate sectors of the greenhouse for protecting the staff member from a high exposure to UV light.

Exchanging information may e.g. include pushing information about the plant to the mobile device or the other way around, e.g. sending a photo of the plant to the control unit. Furthermore, information relating to the plants may be information about the climate surrounding the plants, for example the surrounding humidity, temperature, carbon dioxide levels (CO2), etc. The control unit may be located at a distance from the controlled environment, and communicate by suitable data communication.

Accordingly, advantages with the present invention include the possibility of automatically adjusting the light to human friendly and supervision mode, accessing information regarding the plants in a database, if there are remarks to be logged or to be considered by the staff members, measurements or photos taken from plants, information will be automatically filed from the mobile electronic device to the database. Furthermore, information stored in the database is automatically provided with corresponding position data relating the stored information to a position in the controlled environment. The position data may for example relate to a location of a particular plant in the controlled environment.

According to an embodiment of the invention, adjusting the at least one parameter of light emitted by the artificial lighting arrangement may further be based on a user input provided using a user interface of the mobile electronic device. Using user input allows further control of the parameters of the artificial light based on "user knowledge" once the user is located in the vicinity of the plant. Such input may include setting "supervisor mode", "worker mode" or any other mode to control the light being emitted in the vicinity of the plant.

Determining the current position of the mobile device may be achieved by a continuous method (such as e.g. GPS or similar) or by that the staff member holds the mobile electronic device between the lamp and the plants such that the mobile electronic device may determine the position by using information transmitted by the lamp.

According to an embodiment of the invention, adjusting the at least one parameter of light emitted by the artificial lighting arrangement is performed automatically by the control unit based on the position of the mobile electronic device. Such automatic adjustments may be an effective way to ensure correct performance by the artificial lighting arrangement, in particular with respect to adjustments related to the working conditions of the staff. Furthermore, the light emitted by the artificial light arrangement may be automatically adjusted based on the specific task (during e.g. "inspection mode" or "measurement mode") to be carried out by a staff member at the position. For example, to ensure that measurements relating to the plants are performed in similar conditions at different measurement occasions.

According to an embodiment of the invention, the position of the mobile electronic device may be determined by receiving position based information comprised in the light emitted by the artificial lighting arrangement. Superimposing information in artificial light is known in the art (for example as disclosed by US2013/0029682), and may advantageously be implemented in a Heliospectra lighting arrangement to facilitate determining a position of the mobile electronic device. Furthermore, the position based information may comprise information related to e.g. the present light-setting, such as for example a light regime applied at the current position. A sequence of light spectrums or variation of light spectrum over time may be referred to as a certain "light regime".

According to an embodiment of the invention, the method may further comprise adjusting a user interface of the mobile electronic device based on the position of the mobile electronic device. In this way, it may allow for automatically adapting the user interface of the mobile device such that it suits the task at hand, e.g. including taking pictures of the plant, collection of "plant state" related information of the plant, etc.

According to an embodiment of the invention, the method may further comprise acquiring, using the mobile electronic device, information from at least one sensor arranged in the vicinity of the plant, and providing the acquired information to the remote control unit. This may allow NCF (Near Field Communication) between "local sensors" and the mobile device, i.e. the mobile device may be equipped with means for NFC and so may the locally arranged sensors. The locally arranged sensors may measure e.g. humidity (of e.g. air and/or soil), levels of different fertilizers, carbon dioxide (CO2), etc. Thus the information may be related to humidity (of e.g. air and/or soil), levels of different fertilizers, carbon dioxide (CO2), etc measured by the sensors.

According to second aspect of the present invention there is provided a mobile electronic device for position based management of an artificial lighting arrangement arranged to control growth of a plurality of plants in a controlled environment, wherein the mobile electronic device comprises control circuitry configured for determining a position of the mobile electronic device within the controlled environment. The control circuitry is configured to perform one of the steps of: 1) adjusting at least one parameter of light emitted by the artificial lighting arrangement based on the position of mobile electronic device, and 2) exchanging information between the mobile electronic device and a remote control unit; the information relating to at least one of the plurality of plants, wherein the at least one plant is arranged in the vicinity of the position of the mobile electronic device. This aspect of the invention provides similar advantages as discussed above in relation to the previous aspect of the invention.

The control circuitry may be configured for using a user interface of the mobile electronic device for providing a user input for adjusting the at least one parameter of light emitted by the artificial lighting arrangement. Such a solution may provide increased versatility, and enable a user to interact with the artificial lighting arrangement in an efficient manner. For example, in order to facilitate for a staff member to find a previously inspected plant at a position in the controlled environment, the staff member may provide input using the user interface pointing to the information relating to the plant. If the information relating to the plant is marked in the mobile electronic device at least one parameter of light at the position of the plant is adjusted such that the staff member may easily find the position of the plant in the controlled environment. For example, the intensity of the emitted light at the position may be increased such that the position is lit up, the color of the emitted light at the position may be modified, or the light may flash at the position. When the staff member approaches and is present in the vicinity of the position, the light returns to the previous setting, in other words, the flashing is stopped or the change of color or reversed.

The control circuitry may further be configured for automatically adjusting the at least one parameter of light emitted by the artificial lighting arrangement based on the position of the mobile electronic device. Such automatic adjustments may be an effective way to ensure correct performance by the artificial lighting arrangement, in particular with respect to adjustments related to the working conditions of the staff. Furthermore, the light emitted by the artificial light arrangement may be automatically adjusted based on the specific task (during e.g. "inspection mode" or "measurement mode") to be carried out by a staff member at the position. For example, to ensure that measurements relating to the plants are performed in similar conditions at different measurement occasions. Furthermore, in order to ensure a correct performance by the artificial lighting arrangement the control circuitry may calibrate the artificial lighting arrangement such that an actual output light spectrum approaches a desired output light spectrum. Moreover, the control unit may troubleshoot the artificial lighting arrangement in order to find malfunctioning components in the artificial lighting arrangement such as e.g. broken light-emitting diodes. The control unit may further compensate for delays in communication over a control network when executing control operations, for example when adjusting the at least one parameter of light emitted by the artificial lighting arrangement.

According to an embodiment of the invention, the control circuitry may further be configured for adjusting a user interface of the mobile electronic device based on the position of the mobile electronic device.

According to an embodiment of the invention, the mobile electronic device may further comprise communication means for acquiring information from at least one sensor arranged in the vicinity of the plant, wherein the control circuitry is further configured for providing the information to the remote control unit.

The mobile electronic device may further advantageously comprise a camera device for acquiring a photograph of e.g. a plant. A photograph acquired at a position in the controlled environment is stored with position data relating the photograph to the position. The photograph is further stored together with time data relating the photograph to a time and date when the photograph was acquired. Moreover, the light emitted by the lighting arrangement may be adjusted to be the same when photographs are acquired. In order words, the light settings in a second photograph may be adjusted to be the same as in a first photograph.

Further effects and features of this second aspect of the present invention are largely analogous to those described above in connection with the first aspect of the invention.

According to a third aspect of the present invention there is provided a system for position based management of a plurality of plants being arranged in a controlled environment and subject to light emitted by at least one artificial lighting arrangement, wherein the system comprises a mobile electronic device according to the previous aspects, the artificial lighting arrangement, and a remotely arranged control unit. This aspect of the invention provides similar advantages as discussed above in relation to the previous aspects of the invention.

According to an embodiment of the invention, the system may further comprise at least one sensor arranged in the vicinity of the plant, wherein the mobile electronic device is configured for acquiring information from at least one of said sensor, and providing the acquired information to the remote control unit.

According to an embodiment of the invention, the sensors may be configured to transmit information to the mobile electronic device though wireless communication. This may be NCF (Near Field Communication) between the sensors and the mobile device, i.e. the mobile device may be equipped with means for NFC and so may the locally arranged sensors. The locally arrange sensors may e.g. measure humidity (of e.g. air and/or soil), levels of different fertilizers, carbon dioxide (CO2), etc.

Further effects and features of this third aspect of the present invention are largely analogous to those described above in connection with the previous aspects of the invention.

The control unit is preferably a micro processor or any other type of computing device. Similarly, the computer readable medium may be any type of memory device, including one of a removable nonvolatile random access memory, a hard disk drive, a floppy disk, a CD-ROM, a DVD-ROM, a USB memory, an SD memory card, or a similar computer readable medium known in the art.

According to fourth aspect of the present invention there is provided a computer program product comprising a computer readable medium having stored thereon computer program means for a system for position based management of a plurality of plants, wherein the computer program product comprises code for performing the steps of the method of the invention. Also this aspect of the invention provides similar advantages as discussed above in relation to the previous aspects of the invention.

Further effects and features of this fourth aspect of the present invention are largely analogous to those described above in connection with the previous aspects of the invention.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 shows an exemplary system according to an embodiment of the present invention;
Fig. 2 provides a flow chart of the method steps according to an embodiment of the invention; and
Fig. 3 provides a flow chart of the method steps according to an embodiment of the invention.

### DETAILED DESCRIPTION

The present invention will now be described more fully hereinafter with reference to the accompanying drawings, in which currently preferred embodiments of the invention are shown. This invention may, however, be embodied in many different forms and should not be considered as limited to the embodiments set forth herein; rather, these embodiments are provided for thoroughness and completeness, and fully convey the scope of the invention to the skilled addressee. Like reference characters refer to like elements throughout.

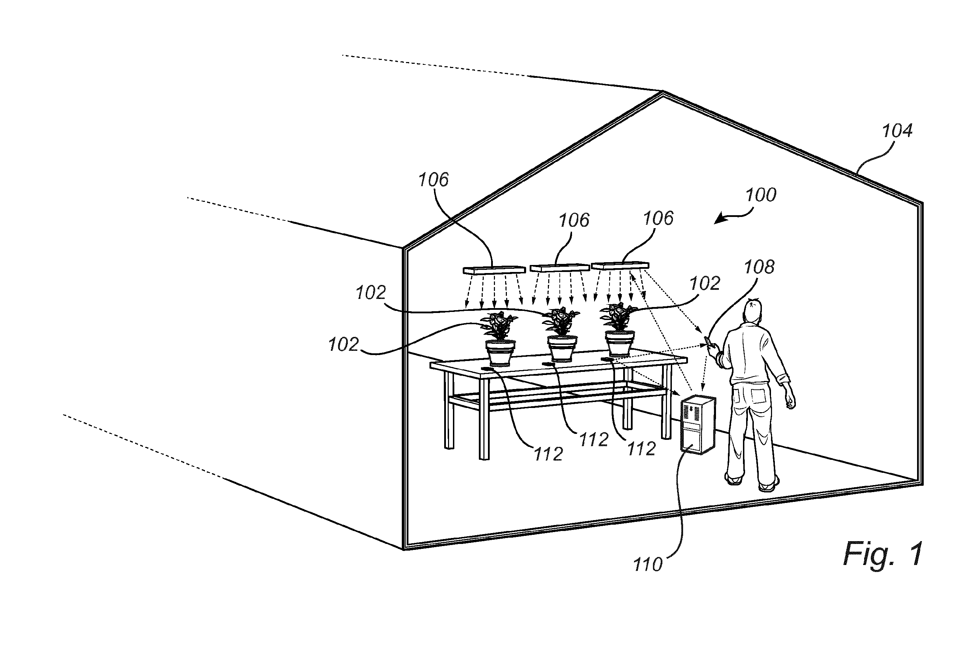

Referring now to the drawings and to Fig. 1 in particular, there is depicted a system 100 according to a possible embodiment of the invention. In Fig. 1 there is illustrated a plurality of plants 102 arranged in an at least partly controlled environment such as a greenhouse 104. There is further shown in Fig. 1 artificial lighting arrangements 106 comprising light-emitting diodes, a mobile electronic device 108, a control unit 110, and a plurality of sensors 112. The mobile electronic device 108 comprises control circuitry configured to determine the position of the mobile electronic device 108 by receiving position information from light emitted by the lighting arrangement 106. Position based information may be information regarding e.g. at which plant 102 the mobile electronic device 108 is located and/or related to e.g. the climate surrounding the plants, for example the surrounding humidity, temperature, carbon dioxide levels (CO2), etc.. The mobile electronic device 108 is further configured for adjusting at least one parameter of the light emitted by the lighting arrangement 106. Such a parameter may be e.g. light intensity, spectral composition, etc. Adjustment may be for e.g. good working conditions for a worker, good lighting for taking a photo, or any other setting of the emitted light. For example, reducing the UV-component of the emitted light such that a staff member is not exposed to, thus protected from, high levels of UV-light. The adjustment may be made from a user interface on the mobile electronic device 108. Furthermore, the adjustment for e.g. good working conditions may be performed automatically by the control unit 110 based on the determined position of the mobile electronic device 108. Still with reference to Fig. 1, there may be sensors 112 arranged in the vicinity of the plants 102. The sensors 112 may be sensors for measuring humidity (of e.g. air and/or soil), levels of different fertilizers, CO2 sensors, etc, or combinations thereof. The mobile electronic device 108 of the system 100 is configured for acquiring information from the sensors 112 in the vicinity of a particular plant 102 and providing the information to the control unit 110. Communication between the sensors 112 and the mobile electronic device 108 may be made through wireless communication such as e.g. NFC, WiFi, Bluetooth, etc. Communication between the mobile electronic device 108, the lighting arrangement 106, and the control unit 110 may be made thought any means of communication suitable for the application, for example, WiFi, W-LAN, Bluetooth, GPS, etc. The position of the mobile electronic device 108 may further be determined by different techniques such as e.g. "Bytelight" related technologies (for example as disclosed by US2013/0029682), WiFi, Bluetooth 4, barcode scanning at the plant, etc. When using Bytelight technology the artificial lighting arrangements 106 are denoted with codes depending on position and/or function. For example, a specific code may relate to: one artificial lighting arrangement 106, a plurality of artificial lighting arrangements 106, an individual artificial lighting arrangements among a plurality of artificial lighting arrangements 106 not sending a bytelight code, artificial lighting arrangements 106 close to an edge of a plant support table, artificial lighting arrangements 106 close to a sensor 112, artificial lighting arrangements 106 close to an exit/entry of the controlled environment 104, etc.

Furthermore, information relating to a plant 102 at a position may be provided directly from the sensors 112 to the control unit 110. The control unit 110 is configured to keep track of which sensors 112 are close to particular plants 102, and to store the measured data obtained by the sensors. The control unit 110 further keeps track of the position and/or the bytelight codes of each of the artificial lighting arrangements 106. Thus, information acquired from a particular sensor 112 at a position may be obtained directly from the control unit 110 by a user.

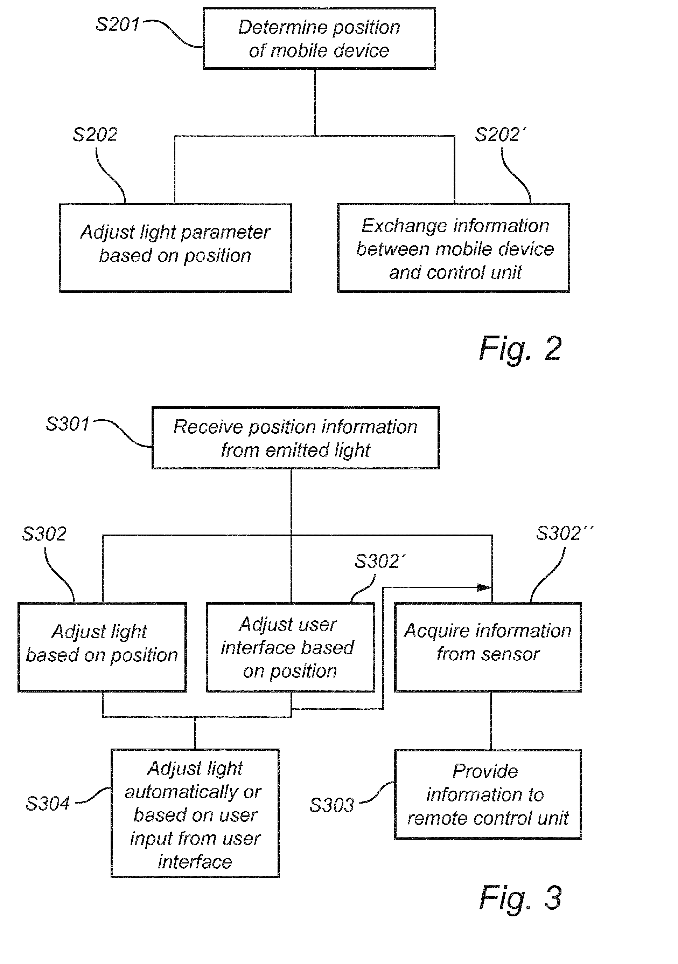

Fig. 2 provides a flow-chart of the method steps according to an embodiment of the invention. In a first step S201, a position of a mobile electronic device 108 is determined using the mobile electronic device 108 operated by a user. After having determined the location of the mobile electronic device 108 one of two steps will follow, or in some situations both steps will follow. In a subsequent step S202 at least one parameter of the light emitted by the lighting arrangements 106 is adjusted. The adjustment may include "good light for workers", specific light for e.g. finding specific conditions of the plant 102 (e.g. fungus, mold, etc), good light for taking a photograph, etc. For example, "good light for workers" may comprise reducing the UV-component of the emitted light such that a staff member is not exposed to, thus protected from, high levels UV-light. Alternatively, or additionally, a subsequent step S202' is to exchange information between the mobile electronic device 108 and the control unit 110. The exchanged information is related to at least one of the plants 102 arranged in the vicinity of the mobile electronic device 108. Furthermore, information relating to the plants may be information about the climate surrounding the plants, for example the surrounding humidity, temperature, carbon dioxide levels (CO2), etc.

Fig. 3 provides a flow chart of the method steps according to a second embodiment of the invention. In a first step S301, the position of a mobile electronic device 108 is determined. The position is determined in step S301 by receiving of position information by the mobile electronic device 108 from the light emitted by the lighting arrangements 106. As a first subsequent step S302 the light emitted by the lighting arrangement 106 is adjusted depending on the position of the mobile electronic device 108 as described with reference to Fig. 2. Adjusting the light may be controlled automatically by the control unit 110. For example, a UV-light component may be automatically adjusted, by the control unit 110, at a determined position of the mobile electronic device 108 as a staff member moves around in the greenhouse 104 with the mobile electronic device 108. Furthermore, based on the position a user interface of the mobile electronic device 108 may be adjusted in step S302'. This may allow e.g. automatically adapting the user interface for a certain task to be carried out. Such a task may be taking a picture of the plant 102, or acquiring information about the plant in step S302". In a subsequent step S304 the light emitted by the lighting arrangement 106 may be adjusted based on user input from the user interface. After having received position information in step S301, the mobile electronic device 108 may acquire information from at least one sensor 112 arranged in the vicinity of a plant 102 in step S302". Such information may be e.g. humidity (of e.g. air and/or soil) level, levels of different fertilizers, CO2, etc. In a next step S303 the information is provided to a control unit 110.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A method for position based management of an artificial lighting arrangement (106) arranged to control growth of a plurality of plants (102) in a controlled environment (104), the method comprising:
- determining (S201, S301), using a user operated mobile electronic device (108), a position of the mobile electronic device (108) within the controlled environment (104), and
- based on said position, performing at least one of the following steps:
- adjusting (S202, S302) at least one parameter of light emitted by the artificial lighting arrangement (106) based on the position of the mobile electronic device (108), and
- exchanging (S202') information between the mobile electronic device (108) and a remotely arranged control unit (110), the information relating to at least one of the plurality of plants (102) located in the vicinity of the position of the mobile electronic device (108).

2. The method according to claim 1, wherein adjusting the at least one parameter of light emitted by the artificial lighting arrangement (106) is further based on a user input provided (S304) using a user interface of the mobile electronic device (108).

3. The method according to claim 1, wherein adjusting the at least one parameter of light emitted by the artificial lighting arrangement (106) is performed automatically by the control unit (110) based on the position of the mobile electronic device (108).

4. The method according to any one of the preceding claims, wherein the position of the mobile electronic device (108) is determined by receiving position based information comprised in the light emitted by the artificial lighting arrangement (106).

5. The method according to claim 1, further comprising adjusting a user interface of the mobile electronic device (108) based on the position of the mobile electronic device (108).

6. The method according to any one of the preceding claims, further comprising:
- acquiring (S302"), using the mobile electronic device (108), information from at least one sensor arranged in the vicinity of the plant, and
- providing (S303) the acquired information to the remote control unit (110).

7. A mobile electronic device (108) for position based management of an artificial lighting arrangement (106) arranged to control growth of a plurality of plants (102) in a controlled environment (104), wherein the mobile electronic device (108) comprises control circuitry configured for:
- determining (S201, S301) a position of the mobile electronic device (108) within the controlled environment (104), and
based on said position, performing at least one of the following steps:
- adjusting at least one parameter of light emitted by the artificial lighting arrangement (106) based on the position of mobile electronic device (108), and
- exchanging (S202') information between the mobile electronic device (108) and a remote control unit (110), the information relating to at least one of the plurality of plants (102), wherein the at least one plant (102) is arranged in the vicinity of the position of the mobile electronic device (108).

8. The mobile electronic device (108) according to claim 7, wherein the control circuitry is further configured for using a user interface of the mobile electronic device (108) for providing (S304) a user input for adjusting the at least one parameter of light emitted by the artificial lighting arrangement (106).

9. The mobile electronic device (108) according to claim 7, wherein the control circuitry is further configured for determining the position of the mobile electronic device (108) by receiving position based information comprised with the light emitted by the artificial lighting arrangement (106).

10. The mobile electronic device (108) according to claim 7, wherein the control circuitry is further configured for adjusting (S302') a user interface of the mobile electronic device (108) based on the position of the mobile electronic device (108).

11. The mobile electronic device (108) according to claim 7, further comprising communication means for acquiring (S302") information from at least one sensor arranged in the vicinity of the plant (102), wherein said control the control circuitry is further configured for providing (S303) the information to the remote control unit (110).

12. A system for position based management of an artificial lighting arrangement (106) arranged to control growth of a plurality of plants (102) in a controlled environment (104), wherein the system comprises:
- a mobile electronic device (108) according to any one of claims 7 - 11;
- the artificial lighting arrangement (106), and
- a remotely arranged control unit (110).

13. The system according to claim 12, further comprising at least one sensor arranged in the vicinity of the plant (102), wherein said mobile electronic device (108) is configured for:
- acquiring (S302") information from the at least one sensor, and
- providing (S303) the acquired information to the remote control unit (110).

14. The system according to claim 13, wherein the sensors are configured to transmit information to the mobile electronic device (108) through wireless communication.

15. A computer program product comprising a computer readable medium having stored thereon computer program means for a system comprising a mobile electronic device (108) adapted for position based management of a plurality of plants (102), the plurality of plants (102) being arranged in a controlled environment (104) and subject to light emitted by at least one artificial lighting arrangement (106), wherein the computer program product comprises code for:
- determining (S201, S301) a position of the mobile electronic device (108) within the controlled environment (104), and
based on said position, performing at least one of the following steps:
- adjusting (S202, S302) at least one parameter of light emitted by the artificial lighting arrangement (106) based on the position of mobile electronic device (108), and
- exchanging (S202') information between the mobile electronic device (108) and a remote control unit (110), the information relating to at least one of the plurality of plants (102), wherein the at least one plant is arranged in the vicinity of the position of the mobile electronic device (108).
